# EUROPEAN PATENT APPLICATION

(11) **EP 4 814 812 A1**
(43) Date of publication of application: **30.09.2026**
(21) Application number: 24897402.4
(22) Date of filing: 20.11.2024
(51) Int. Cl.: G06N 20/00, B25J 13/00

(54) **ANNOTATION DEVICE, ANNOTATION SYSTEM, LEARNING SYSTEM, AND ANNOTATION METHOD**

(30) Priority: 30.11.2023 WO PCT/JP2023/042876
(71) Applicant: KAWASAKI JUKOGYO KABUSHIKI KAISHA, Kobe-shi, Hyogo 650-8670 (JP)
(72) Inventor: IMOTO, Ryota, Chuo-ku, Kobe-shi Hyogo 650-8670 (JP); MATSUDA, Kippei, Chuo-ku, Kobe-shi Hyogo 650-8670 (JP); TAKATA, Suguru, Chuo-ku, Kobe-shi Hyogo 650-8670 (JP)
(74) Representative: Müller-Boré & Partner Patentanwälte PartG mbB
(86) International application number: PCT/JP2024/041097
(87) International publication number: WO 2025/115716

(57) **Abstract**

An annotation device includes: a first controller that generates a training data set, and a storage unit that stores the data set. The first controller is configured to: acquire a first image captured by an imaging device and including a target object; acquire operational information related to an operation performed on the target object by an end effector and determine whether or not the end effector has executed a predetermined first operation on the target object; generate, as the data set, the first image and first information, including a position corresponding to the first operation, of the end effector if the end effector has executed the first operation; and cause the storage unit to store the generated data set.

## Description

### TECHNICAL FIELD

The present disclosure relates to annotation devices, annotation systems, training systems, and annotation methods.

### BACKGROUND ART

A known device generates training data used for machine learning. For example, Japanese Unexamined Patent Application Publication No. 2021-71878 describes an annotation device that includes an imaging device, a robot, a controller, a designation unit, a coordinate processor, and a storage unit. The controller controls the robot to acquire training images of multiple target objects having different positional relationships with the imaging device. The position of each target object is designated by a user using an input unit as the designation unit. Alternatively, the position of each target object is designated by using an image processing algorithm with an image processor serving as the designation unit. The storage unit converts the position of the target object in a robot coordinate system into a position of the target object in an image coordinate system at the time of imaging, and stores the position together with the training image.

### SUMMARY OF THE INVENTION

### TECHNICAL PROBLEM

In the technology described in Japanese Unexamined Patent Application Publication No. 2021-71878, the known position of each target object in the robot coordinate system is used, whereby the position of the target object in the image coordinate system of the acquired image can be automatically acquired. However, depending on the shape of the target object or the material of the target object, it may be difficult to distinguish the target object from the image. Furthermore, when the position is to be designated by the user, there is concern that the work cost may increase. Moreover, even when the position of the target object can be acquired from the image, if the shape of the target object is complex, it may be difficult to output the position and posture of the robot for executing a predetermined process on the target object.

### SOLUTION TO THE PROBLEM

The present disclosure has been made to at least partially solve the aforementioned problems, and can be realized as, for example, the following aspects.

A first aspect of the present disclosure provides an annotation device. The annotation device includes: a first controller configured to generate a training data set; and a storage unit configured to store the data set. The first controller is configured to acquire a first image captured by an imaging device and including a target object. The first controller is configured to acquire operational information related to an operation performed on the target object by an end effector and determine whether or not the end effector has executed a predetermined first operation on the target object. The first controller is configured to generate, as the data set, the first image and first information of the end effector if the end effector has executed the first operation. The first information includes a position corresponding to the first operation of the end effector. The controller is configured to cause the storage unit to store the generated data set.

A second aspect of the present disclosure provides an annotation system. The annotation system includes: an imaging device; a detector; and an annotation device. The imaging device is configured to capture a first image including a target object. The detector is configured to detect operational information of an end effector configured to execute a predetermined operation on the target object. The annotation device includes a first controller and a storage unit, the first controller being configured to generate a training data set. The first controller is configured to acquire the operational information and determine whether or not the end effector has executed a predetermined first operation on the target object. The first controller is configured to generate, as the data set, the first image and first information if the end effector has executed the first operation. The first information includes a position corresponding to the first operation. The first controller is configured to cause the storage unit to store the generated data set.

A third aspect of the present disclosure provides an annotation method. The annotation method includes: acquiring a first image captured by an imaging device and including a target object; acquiring operational information related to an operation performed on the target object by an end effector and determining whether or not the end effector has executed a predetermined first operation on the target object; and generating, as a data set for supervised learning, the first image and first information of the end effector if the end effector has executed the first operation, the first information including a position corresponding to the first operation.

### BRIEF DESCRIPTION OF THE DRAWINGS

[Fig. 1] Fig. 1 is a schematic diagram of an annotation system according to a first embodiment.
[Fig. 2] Fig. 2 is a block diagram of the annotation system according to the first embodiment.
[Fig. 3] Fig. 3 is a flowchart illustrating an annotation process.
[Fig. 4] Fig. 4 is a flowchart of a training process.
[Fig. 5] Fig. 5 is a diagram illustrating an example of an input operation.
[Fig. 6] Fig. 6 is a diagram illustrating a linked tool attached to a finger of a user.
[Fig. 7] Fig. 7 is a diagram illustrating how a workpiece is gripped by two fingers to which linked tools are attached.
[Fig. 8] Fig. 8 is a diagram illustrating a pen-type linked tool provided with a marker unit at an end of an extending section.
[Fig. 9] Fig. 9 is a diagram illustrating a gripping-type linked tool provided with a marker unit at an end of an extending section.
[Fig. 10] Fig. 10 is a diagram illustrating a gripping-type linked tool provided with marker units at ends of extending sections, each extending section extending in a direction intersecting a central axis of the corresponding marker unit.

### DESCRIPTION OF EMBODIMENTS

### <First Embodiment>

### <Configuration of Annotation System>

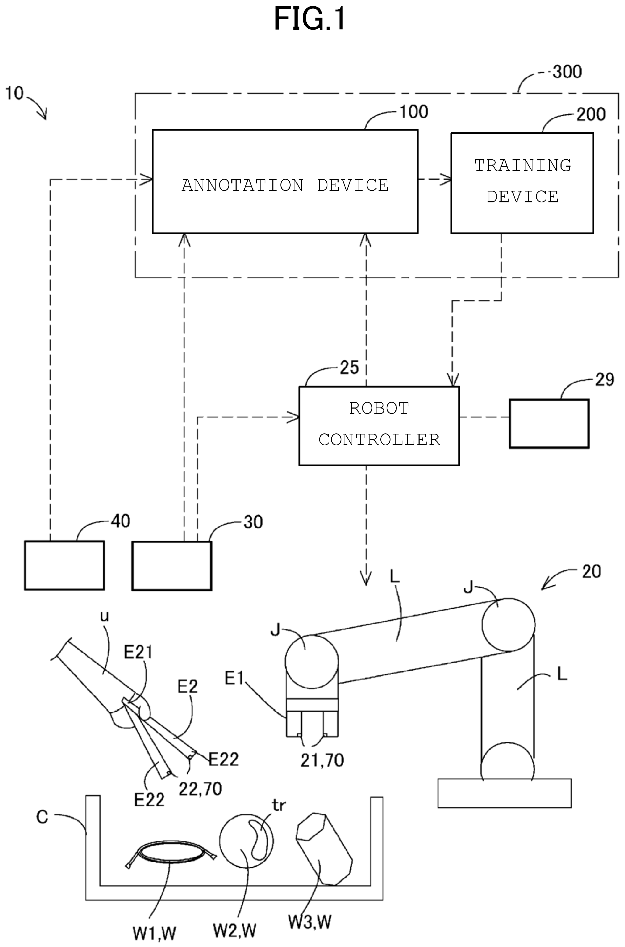

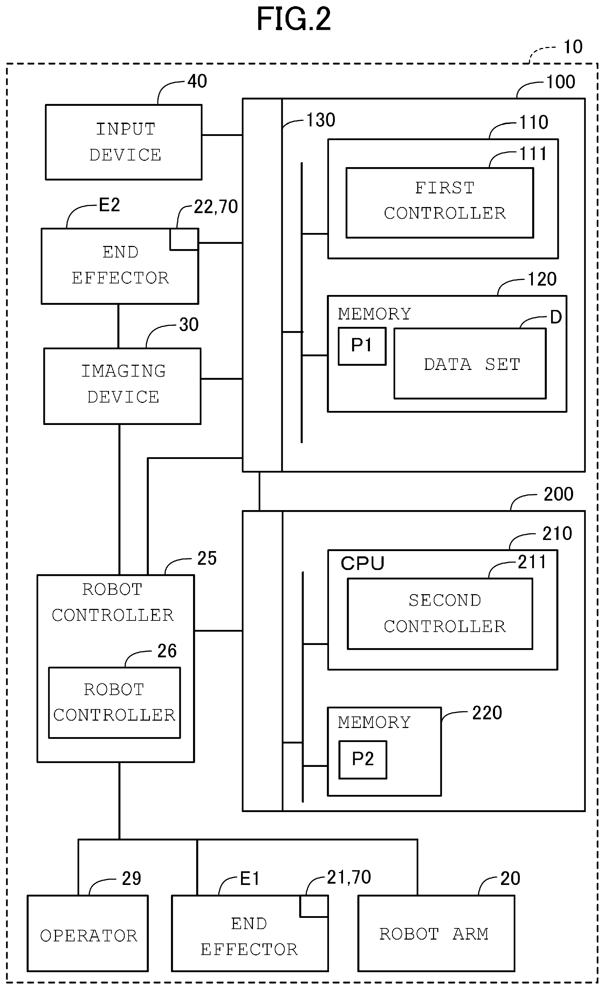

Fig. 1 is a diagram illustrating an example of an annotation system 10 according to a first embodiment. Fig. 2 is a schematic block diagram of the annotation system 10. The annotation system 10 mainly includes an imaging device 30, a detector 70, and an annotation device 100. The annotation system 10 according to this embodiment further includes a robot controller 25, an operator 29, and an input device 40. The annotation system 10 is configured to generate a data set containing an image including a target object and first information including a position of an end effector when the end effector performs a predetermined first operation on the target object.

In this embodiment, each of the end effectors E1 and E2 applied to the annotation system 10 is a gripping-type tool configured to grip a workpiece W as the target object. The first operation is an operation (gripping operation) in which the end effector E1 or E2 grips the workpiece W. The "operation" may also be regarded as a process or an action. In this embodiment, the first information includes a position and posture of the end effector E1 or E2 when the end effector E1 or E2 grips the workpiece W. The first information in this embodiment is three-dimensional information. A position is positional coordinate information in a coordinate system in which a predetermined reference point is set as an origin point. A posture is information about the orientation (angle) of the end effector E1 or E2.

The end effector E1 is a robot hand detachably attached to a robot arm 20. The robot arm 20 is a vertical articulated robot having six degrees of freedom. Two neighboring joints J are coupled by a link L. For example, each joint J includes known components, such as a servo-motor, an encoder, and a reduction gear. Each joint J moves in accordance with control of the robot controller 25.

The robot controller 25 is configured as a computer including a CPU and a memory. The CPU of the robot controller 25 loads and executes a program stored in the memory to function as a robot controller 26. The robot controller 26 controls the operation of the robot arm 20 and the end effector E1.

The operator 29 is connected to the robot robot controller 25. The operator 29 receives a user operation related to the operation of the end effector E1. The operator 29 may be a so-called teaching pendant. The end effector E1 can grip and move the workpiece W in response to the user operation performed on the operator 29, and can also release the gripped workpiece W. In other words, the end effector E1 can perform a so-called pick-and-place operation.

The end effector E2 is a linked tool that is supported by fingers of a user u and that operates in conjunction with movement of the fingers of the user u. The end effector E2 is a substantially V-shaped tool having a base E21 at the finger side of the user u and two distal ends E22 at the opposite side from the base E21. The two distal ends E22 of the end effector E2 move toward and away from each other in accordance with the movement of the fingers of the user u. Accordingly, the end effector E2 can grip and move the workpiece W, and can also release the gripped workpiece W.

The distal end of the end effector E1 and the distal ends E22 of the end effector E2 are respectively provided with a first sensor 21 and a second sensor 22. The first sensor 21 and the second sensor 22 each function as the detector 70 that detects operational information related to the operation of the corresponding end effector E1 or E2. In this embodiment, the first sensor 21 and the second sensor 22 are pressure sensors. A detection value of the first sensor 21 changes in accordance with the degree by which the end effector E1 is in contact with the workpiece W. Thus, the gripping operation of the end effector E1 can be estimated from a detection result of the first sensor 21. Likewise, a detection value of the second sensor 22 changes in accordance with the degree by which the end effector E2 is in contact with the workpiece W. Thus, the gripping operation of the end effector E2 can be estimated from a detection result of the second sensor 22.

The imaging device 30 includes a camera having an optical system and a two-dimensional imaging element. The imaging device 30 is attached to a wall, a ceiling, or the like surrounding the robot arm 20. The imaging device 30 captures an image within a container C at predetermined intervals, thereby acquiring an image of the workpiece W before being gripped by the end effector E1 or E2, an image of the workpiece W when it is gripped, an image of the workpiece W after it is gripped, and the like. The image of the workpiece W before being gripped by the end effector E1 or E2 is also referred to as a "first image". In this embodiment, the first image includes the workpiece W but does not include the end effector E1 or E2.

The input device 40 is configured to be capable of inputting various commands and information to the annotation device 100. A command includes, for example, a start command for an annotation process or training process to be described later. The input device 40 may be, for example, any of various input terminals, such as a touchscreen or a push button device.

As illustrated in Fig. 2, the annotation device 100 includes a CPU (central processing unit) 110 serving as a processor, a memory 120, and an interface circuit 130. The annotation device 100 is communicably connected to peripheral devices, including the robot controller 25, the imaging device 30, and the input device 40, via the interface circuit 130. For communication, wireless communication or wired communication based on a known communication method may be used.

The memory 120 includes a volatile memory and a nonvolatile memory. The memory 120 has an annotation program P1 stored therein. The CPU 110 loads and executes the annotation program P1 stored in the memory 120 to function as a first controller 111. The first controller 111 executes an annotation process.

As illustrated in Fig. 1 and Fig. 2, the annotation device 100 is connected to a training device 200. The training device 200 includes a CPU 210 serving as a processor, a memory 220, and an interface circuit 230. The training device 200 is communicably connected to the annotation device 100 and the robot controller 25 via the interface circuit 230.

The memory 220 includes a volatile memory and a nonvolatile memory. The memory 220 has a training program P2 stored therein. The CPU 210 loads and executes the training program P2 stored in the memory 220 to function as a second controller 211. The second controller 211 executes a training process by using a data set D collected in the annotation process. The annotation device 100 and the training device 200 constitute a training system 300.

### <Annotation Process>

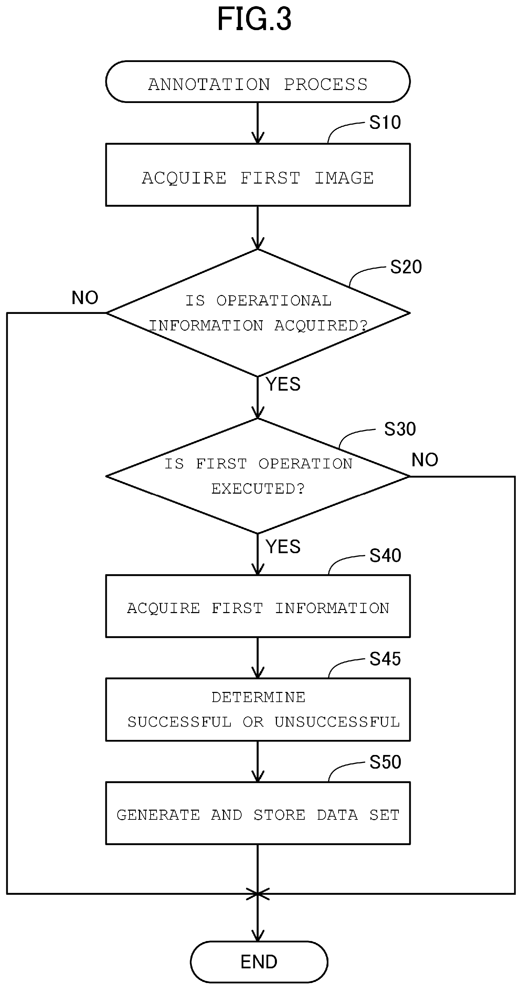

Fig. 3 is a diagram illustrating a flowchart of the annotation process executed by the first controller 111. In this embodiment, the annotation process starts in response to a start command input to the annotation device 100 via the input device 40. As mentioned above, in the annotation system 10, the end effector E1 serving as a robot hand and the end effector E2 serving as a linked tool may be used. First, the following description relates to an annotation process when a robot hand (end effector E1) is applied as an end effector that grips the workpiece W.

### <Annotation Process Using Robot Hand>

When the annotation process starts, the first controller 111 acquires a first image from the imaging device 30 in step S10. In this embodiment, when the annotation process starts, the imaging device 30 captures an image of the workpiece W within the container C from above in response to a request from the first controller 111, and transmits the captured image as the first image to the annotation device 100. In this embodiment, the first image is a color image. The first image may be a distance image, or may be a color image and a distance image.

In step S20, the first controller 111 determines whether or not operational information of the end effector E1 is acquired via the detector 70. The operational information is information related to a gripping operation performed on the workpiece W by the end effector E1. With regard to the end effector E1, the operational information is a detection value of the first sensor 21. In this embodiment, when the annotation process starts, the first controller 111 requests the robot controller 25 to transmit the operational information. If the end effector E1 is in operation (on mode), the robot controller 25 repeatedly transmits the detection value of the first sensor 21 as the operational information to the annotation device 100. Upon acquiring the operational information, the first controller 111 obtains a positive determination result in step S20 and causes the annotation process to proceed to step S30. If the operational information is not acquired, the first controller 111 obtains a negative determination result in step S20 and ends the annotation process.

In step S30, the first controller 111 uses the operational information to determine whether or not the end effector E1 has executed the first operation. If the detection value of the first sensor 21 satisfies a predetermined determination condition, the first controller 111 determines that the first operation has been executed. In this embodiment, if the detection value of the first sensor 21 is larger than or equal to a first threshold value stored in the memory 120, the first controller 111 determines that the first operation has been executed. The first threshold value is set based on a lower limit for the detection value of the first sensor 21 obtained when the workpiece W is gripped by the end effector E1. The first threshold value is set in advance based on experimentation or simulation. Step S30 is also a step in which the first controller 111 determines whether or not an "event" called the first operation has occurred. If the detection value of the first sensor 21 is larger than or equal to the first threshold value, the first controller 111 obtains a positive determination result in step S30 and causes the process to proceed to step S40.

In contrast, if the detection value of the first sensor 21 is smaller than the first threshold value, the first controller 111 obtains a negative determination result in step S30 and ends this processing routine. If the first controller 111 obtains the negative determination result in step S30, the first controller 111 may end this processing routine and then repeatedly execute the annotation process. Alternatively, the first controller 111 may cause the process to return to step S20, and repeat the acquisition of the operational information in step S20 and the determination in step S30 until obtaining a positive determination result in step S30.

In step S40, the first controller 111 acquires first information corresponding to the first operation. The first information is information including a position when the end effector E1 has executed the first operation. In this embodiment, the first controller 111 acquires, via the robot controller 25, a position and posture when the first operation is executed. The expression "when the first operation is executed" can also be reworded as a timing at which the first operation is executed or a time point at which the first operation is executed. In this embodiment, the expression "when the first operation is executed" has the meaning of "when the end effector E1 grips the workpiece W" and "before the end effector E1 moves the workpiece W".

In this embodiment, the first information includes a gripping position and gripping posture when the end effector E1 grips the workpiece W, that is, when the detection value of the first sensor 21 becomes larger than or equal to the first threshold value. The first information may include the opening width of the end effector E1. Together with the detection value of the first sensor 21, the first controller 111 may acquire a position and posture of the end effector E1 when the detection value is obtained, and may sequentially store the detection value and the position and posture into the memory 120. By referring to the memory 120, the first controller 111 may acquire, as the first information, the position and posture of the end effector E1 corresponding to the detection value of the first sensor 21 when the positive determination result is obtained in step S30.

Upon acquiring the first information, the first controller 111 causes the annotation process to proceed to step S45 and determines whether or not the first operation is successful. Furthermore, the first controller 111 generates second information indicating whether or not the first operation is successful. A state where the first operation is successful is a state where the workpiece W has reached a predetermined state as a result of the end effector E1 executing the first operation on the workpiece W. A state where the first operation is unsuccessful is a state where the workpiece W has not reached the predetermined state even though the end effector E1 has executed the first operation on the workpiece W. In this embodiment, the predetermined state is a state where the workpiece W has been gripped and moved by the end effector E1. If the end effector E1 has gripped the workpiece W and has then successfully moved the workpiece W, the first controller 111 determines that the first operation is successful. In the process of the end effector E1 gripping the workpiece W and then moving the workpiece W, if the position or posture of the workpiece W relative to the end effector E1 deviates or if the workpiece W falls, the first controller 111 determines that the first operation is unsuccessful. The first controller 111 can use the determination result of the first sensor 21 to determine whether or not the workpiece W is continuously gripped by the end effector E1. The first controller 111 may determine that the first operation is successful when the workpiece W is gripped by the end effector E1 and is moved by a predetermined movement amount or more. In this case, the first controller 111 may acquire the movement amount of the end effector E1 via the robot controller 26 or the imaging device 30.

In step S50, the first controller 111 generates a training data set D containing the first image and the first information. Generating a data set D also involves annotating the gripping position and gripping posture of the end effector E1 onto the first image. In this embodiment, the first controller 111 causes the data set D to contain the second information generated in step S40. The first controller 111 stores the generated data set D into the memory 120. Accordingly, the annotation process performed by the first controller 111 ends.

### <Annotation Process Using Linked Tool>

The following description relates to an annotation process when a linked tool (end effector E2) is used as an end effector that grips the workpiece W. The annotation process using the end effector E2 is different from the annotation process using the end effector E1 mainly in terms of the acquisition of the operational information (step S20 in Fig. 3) and the acquisition of the first information (step S40 in Fig. 3). In detail, after acquiring the first image in step S10, the first controller 111 determines in step S20 whether or not a detection value of the second sensor 22 provided at the end effector E2 is acquired. For example, the second sensor 22 may be configured to repeatedly transmit the detection value to the annotation device 100 in response to an on operation performed on the second sensor 22 by the user.

When the detection value of the second sensor 22 is acquired (YES in step S20), the first controller 111 determines in step S30 whether or not the detection value of the second sensor 22 is larger than or equal to a second threshold value stored in the memory 120. The second threshold value is set based on a lower limit for the detection value of the second sensor 22 obtained when the workpiece W is gripped by the end effector E2. The second threshold value is set in advance based on experimentation or simulation. If the detection value of the second sensor 22 is larger than or equal to the second threshold value, the first controller 111 obtains a positive determination result in step S30 and causes the process to proceed to step S40. In contrast, if the detection value of the second sensor 22 is smaller than the second threshold value, the first controller 111 obtains a negative determination result in step S30 and ends this processing routine.

In step S40, the first controller 111 acquires, via the imaging device 30, a position and posture of the end effector E2 when the first operation is executed. The imaging device 30 repeatedly captures an image from above the container C in response to a request from the first controller 111, and transmits the captured image to the first controller 111. The first controller 111 stores the image and the detection value of the second sensor 22 into the memory 120. The first controller 111 can acquire a gripping position and gripping posture of the end effector E2 as the first information by analyzing the image corresponding to the detection result of the second sensor 22 obtained when the first operation is executed. In another embodiment, the imaging device 30 may include an image processing device to analyze the aforementioned image for acquiring the position and posture of the end effector E2 and transmit the image to the annotation device 100. Since other steps in the annotation process using the end effector E2 as a linked tool are similar to those in the annotation process using the end effector E1 as a robot hand, descriptions thereof will be omitted.

The annotation process described above is executed on multiple workpieces W, whereby multiple data sets D are collected into the memory 120. Next, a training process using the data sets D will be described.

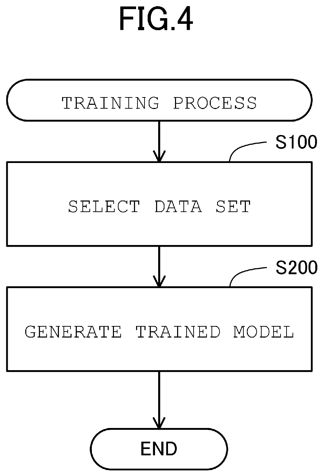

Fig. 4 is a flowchart illustrating a training process executed by the second controller 211 of the training device 200. The second controller 211 executes the training process when a start command for the training process is issued to the training device 200. The start command may be input to the training device 200 directly or indirectly from the input device 40. Alternatively, the start command may be input to the training device 200 from the annotation device 100 when the annotation process is completed or when a predetermined number of collected data sets D is reached.

In step S100, the second controller 211 acquires the data sets D from the annotation device 100 and selects a data set D suitable for the training process. In this embodiment, the second controller 211 selects, from among the multiple data sets D, a data set D in which the second information indicates that the first operation is successful. The second controller 211 may be configured to further use a predetermined determination criterion to determine a first image that is unclear. The second controller 211 may remove a data set D containing an unclear first image from among the multiple data sets D.

In step S200, the second controller 211 performs supervised learning using the selected data set D to generate a trained model, and stores the trained model into the memory 220. If a trained model is already stored in the memory 220, the second controller 211 updates the trained model. By using the trained model generated in this manner, the gripping position and gripping posture for the end effector E1 or E2 to execute the gripping operation on the workpiece W included in the first image can be output in response to input of the first image. In step S100, the second controller 211 may select all data sets D including not only the data set D in which the second information indicates that the first operation is successful but also a data set D in which the second information indicates that the first operation is unsuccessful. The data sets D used for performing the supervised learning in step S200 by the second controller 211 may include, in addition to the data set D indicating the first image, the first information, and the successful first operation, the data set D indicating the first image, the first information, and the unsuccessful first operation.

The advantages of the above-described embodiment will now be described.

A known method for automating a pick-and-place operation performed on each workpiece W involves acquiring the position of the workpiece W from a captured image by using a trained model, and causing the end effector E1 attached to the robot arm 20 to perform a gripping operation by using the acquired position of the workpiece W. This trained model in the related art may be generated by using, for example, a data set to which positional information of the workpiece W has been added to the captured image. However, the positional information of the workpiece W is annotated onto the captured image by, for example, displaying the captured image on a monitor and allowing the user to input the position of the workpiece on the monitor, or performing predetermined image processing on the captured image. Therefore, there is concern that the work cost for the annotation may increase or that the annotation accuracy may decrease due to the annotation being performed by the user. In particular, a decrease in annotation accuracy leads to an unsuccessful gripping operation performed on the workpiece W by the end effector E1.

The container C illustrated in Fig. 1 accommodates multiple workpieces W. A workpiece W1 is a cable-like workpiece. A workpiece W2 is a workpiece having a transparent portion tr that transmits light. A workpiece W3 is a polygonal workpiece. Since the transparent portion tr is unlikely to appear in the captured image, it may be difficult to add the positional information of the workpiece W2 to the captured image, or the positional information may be inaccurate. Thus, the work cost may further increase, or the annotation accuracy may further decrease. A similar concern arises not only for the transparent portion tr but also for a workpiece having a semi-transparent portion or a workpiece using a reflective material. Furthermore, even when the positional information of a workpiece is output in response to input of an image in accordance with the trained model in the related art, if the gripping position by the end effector is not appropriate, the gripping operation may possibly be unsuccessful. In particular, the gripping operation may be unsuccessful for workpieces having complex shapes, such as the workpieces W1 and W3.

In contrast, in this embodiment, the first controller 111 generates, as a training data set D, the first image including the workpiece W and the first information including the position and posture of the end effector E1 or E2 when the workpiece W is actually gripped by the end effector E1 or E2. In other words, instead of an estimated gripping position and gripping posture, the first controller 111 annotates an actual gripping position and gripping posture (in a physical space) of the end effector E1 or E2 onto the first image acquired in the physical space. Therefore, a training data set D can be generated, and data sets D can be collected, regardless of the material and shape of the workpiece W. Moreover, because the first controller 111 annotates the first information onto the first image, the work cost for the annotation is reduced, as compared with a case where the user performs the annotation.

Furthermore, the first controller 111 uses the detection result of the first sensor 21 or the second sensor 22 serving as the detector 70 to determine whether or not the end effector E1 or E2 has executed the first operation. Thus, according to this embodiment, it can be determined (detected) whether or not the first operation has been executed without interrupting the operation by the end effector E1 or E2. Consequently, the time required for collecting the data sets D can be shortened.

Moreover, the second controller 211 performs supervised learning using the collected data sets D, so as to generate a trained model. When a first image is input, the generated trained model can output first information including the position for the end effector E1 or E2 to execute the first operation on the workpiece W. The first information used for training does not include an estimated value but includes the position and posture when the end effector E1 or E2 has actually executed the first operation on the workpiece W. Therefore, even when the workpiece W included in the first image includes the transparent portion tr or the workpiece W has a complex shape, it is possible to generate a trained model capable of outputting a position and posture for the end effector E1 or E2 to execute the first operation in response to input of the first image. Furthermore, the success rate of the first operation can be increased when the first operation is executed using the position and posture output from the aforementioned trained model.

Moreover, each data set D includes the second information indicating whether the first operation is successful or unsuccessful. From among the collected data sets D, the second controller 211 selects a data set D in which the second information indicates that the first operation is successful, and performs training. Thus, the accuracy of the trained model is enhanced. Consequently, the success rate of the first operation can be further enhanced when the first operation is executed using the position and posture output from the generated trained model. If supervised learning is to be performed by using not only the data set D in which the second information indicates that the first operation is successful but also a data set D in which the second information indicates that the first operation is unsuccessful, the accuracy of the trained model is further enhanced.

In this embodiment, the first controller 111 of the annotation device 100 may convert the operation of the end effector E2 serving as a linked tool supported by the fingers of the user u into an operation of the robot hand including the end effector E1. Therefore, collecting the data set D containing the first image and the first information including the position and posture of the end effector E2 when the end effector E2 performs the first operation, as well as performing the training process, contribute to automation of a gripping operation executed on the workpiece W. A known configuration for converting an operation of the end effector E2 into an operation of a robot hand involves preliminarily storing a correspondence relationship between the position and posture of the end effector E2 and the position and posture of the robot hand into the memory 120 and causing the first controller 111 to convert a gripping position and gripping posture of the end effector E2 into a gripping position and gripping posture of the robot hand by using the correspondence relationship. With this configuration, the gripping position and gripping posture for the robot hand to perform a gripping operation on the workpiece W can be output in response to input of the first image including the workpiece W.

In step S30 (Fig. 3) of the above-described annotation process, the first controller 111 acquires the detection value of the first or second sensor 21 or 22 as operational information and determines whether or not the first operation has been executed. Alternatively, the first controller 111 may acquire a predetermined input operation as operational information.

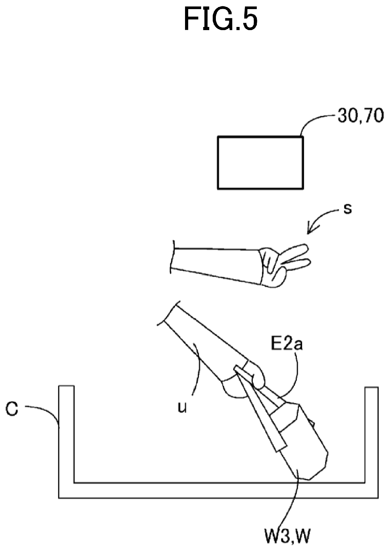

Fig. 5 illustrates an example of the predetermined input operation. An end effector E2a illustrated in Fig. 5 is a substantially V-shaped linked tool supported by one of the hands of the user u. The end effector E2a is not equipped with a sensor. Fig. 5 illustrates a state where the user u is directing a hand signal s made with the other hand as an input operation toward the imaging device 30. As illustrated in Fig. 5, the predetermined input operation may involve inputting the hand signal s to the imaging device 30. In this case, the imaging device 30 may function as the detector 70 that detects the input operation. Alternatively, the predetermined input operation may be a button operation performed on the input device 40, the operator 29, or another input device by the user. In this case, the input device 40 or the operator 29 may function as the detector 70. When the predetermined input operation is detected via the detector 70 (YES in step S20 in Fig. 3), the first controller 111 may determine that the first operation has been executed (YES in step S30 in Fig. 3).

Although the description of the above embodiment relates to the annotation process using the gripping-type end effector E1 or E2 that grips the workpiece W, the annotation process can also be applied to another end effector. For example, the end effector may be a suction-type tool equipped with a suctioning section that suctions the workpiece W and capable of suctioning and moving the workpiece W. In this case, the first operation is a suctioning operation performed on the workpiece W by the end effector, and the first information includes a suctioning position and suctioning posture. The suctioning section provided at the end effector may be configured to suction the workpiece W by using air, may be configured to magnetically attract the workpiece W, or may be configured to electrostatically attract the workpiece W. The end effector may also be equipped with a known sensor or mechanism for detecting a suction force applied by the suctioning section. The first controller 111 may use a detection result of the sensor or mechanism to determine whether or not the workpiece W has been suctioned (step S40 in Fig. 3). Alternatively, when the predetermined input operation is detected (YES in step S20 in Fig. 3), the first controller 111 may determine that the suctioning operation has been executed.

### <Other Embodiments>

The various embodiments described above may be variously modified so long as the first controller 111 determines whether or not a first operation has been executed on a target object by an end effector, acquires first information including a position and posture when the end effector performs the first operation, and generates a data set containing a first image, including the target object, and the first information.

For example, the end effector may be a finger of the user, and the first operation may be a predetermined operation performed on the target object by using the finger. In this case, the first operation may be an operation for gripping the workpiece W by using the finger, or may be an operation for touching the workpiece W by using the finger. Similar to the above embodiment in which the first controller 111 can convert an operation of the end effector E2 serving as a linked tool into an operation of a robot hand, such as the end effector E1, the first controller 111 can also convert a finger operation of the user into an operation of the robot hand by using a correspondence relationship between the finger operation and the operation of the robot hand. Therefore, a data set containing a first image including a target object and first information including a finger position and posture when the user's finger performs the first operation is collected, and a training process using the data set is performed, whereby a position and posture for the robot hand to execute the first operation can be output with respect to the first image. Accordingly, even when the end effector is the user's finger or includes the user's finger, advantages similar to those of the above embodiment are exhibited.

When an annotation process is to be executed by using the user's finger as an end effector, if the first controller 111 detects an operation performed by the user on the operator 29, the input device 40, or another input device, or detects a predetermined input operation, such as the hand signal s (YES in step S20 in Fig. 3), the first controller 111 may determine that the first operation has been executed (YES in step S30 in Fig. 3). Furthermore, the first controller 111 may acquire, as the first information, the user's finger position and posture corresponding to the first operation via the imaging device 30 (step S40 in Fig. 3), and generate a data set D containing the first image and the user's finger position and posture (step S50 in Fig. 3). Moreover, if the user's finger is to be used as an end effector, a marker unit may be attached to the user's finger, and the first controller 111 may acquire an image containing a marker via the imaging device 30 and perform known position estimation using the marker, thereby acquiring the user's finger position and posture corresponding to the first operation. In the configuration where the annotation process is executed by using the user's finger as an end effector, modifications as exemplified by other embodiments 1 to 3 below are also possible. The marker in the marker unit may be an AR (augmented reality) marker. In the description hereinafter, an image containing a marker will also be referred to as a marker image.

### <Another Embodiment 1>

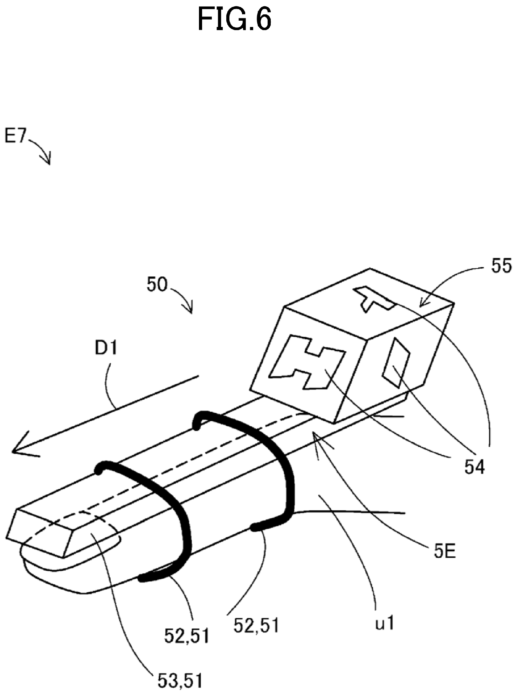

Fig. 6 illustrates a linked tool 50 attached to a finger u1 of the user. In the configuration illustrated in Fig. 6, the user's finger u1 and the linked tool 50 can be regarded as an end effector E7 that executes a predetermined operation on a target object. The end effector E7 executes the predetermined operation, such as a contact operation, on the workpiece W present in a direction of an arrow D1. The linked tool 50 includes a restriction mechanism 51 that restricts the degree of freedom of movement of the user's finger u1, and a box-shaped member 55 provided with markers 54. Although areas other than the markers 54 on the box-shaped member 55 are actually colored in, for example, black to make the markers 54 distinguishable by a camera, such as the imaging device 30 or 30a, the color of these areas is omitted in Fig. 6 and subsequent drawings. The restriction mechanism 51 restricts the degree of freedom of movement of the user's finger u1 to the same degree of freedom of a robot hand. The restriction mechanism 51 includes a plate-shaped member 53 and an attachment section 52 for attaching the plate-shaped member 53 to the finger u1. The attachment section 52 is formed in a belt shape. The attachment section 52 may be a rubber-like member. When the restriction mechanism 51 is attached to the finger u1, the joints of the finger u1 are restricted in movement. In detail, the joints of the finger u1 become non-bendable. The plate-shaped member 53 is an angle-constraining member that constrains the angle of the user's finger u1. According to this configuration, the first controller 111 performs position estimation using the markers 54, so that the position and posture (first information) of the finger u1 corresponding to the first operation can be obtained, and the movement of the finger u1 can be made to resemble the movement of the robot hand by the restriction mechanism 51. Thus, when the position and posture of the finger u1 corresponding to the first operation are converted into the position and posture of the robot hand, the success rate of the first operation by the robot hand increases. Moreover, in this configuration, since the linked tool 50 is attached to the user's finger u1, the first information can be acquired without hindering the movement of the finger u1.

### <Another Embodiment 2>

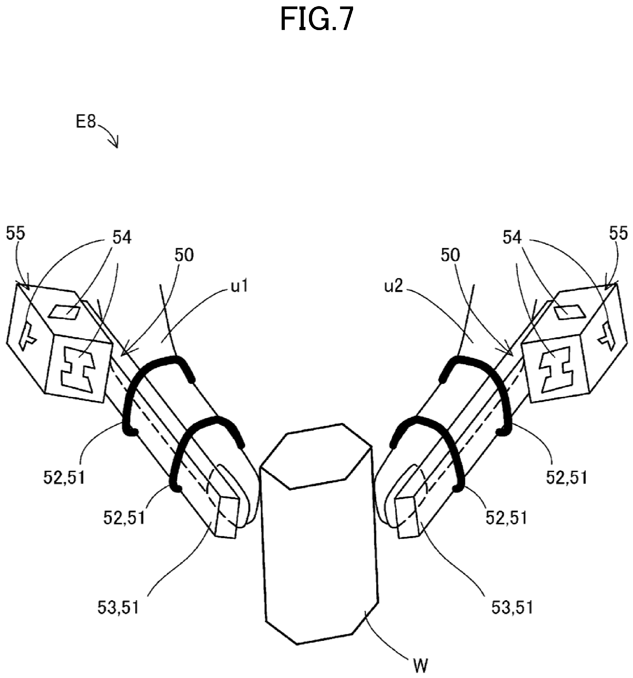

Fig. 7 illustrates how the workpiece W is gripped by two fingers u1 and u2 to which linked tools 50 and 50 are attached. In Fig. 7, the fingers u1 and u2 of the user and the linked tools 50 and 50 can be regarded as an end effector E8 that executes a predetermined operation on a target object. In this configuration, the first controller 111 similarly performs position estimation using the markers 54, so as to be capable of obtaining the positions and postures (first information) of the fingers u1 and u2 corresponding to the operation (first operation) for gripping the workpiece W by using the fingers u1 and u2. Furthermore, the restriction mechanisms 51 and 51 can make a gripping operation by the fingers u1 and u2 resemble a gripping operation by a robot hand. Thus, the accuracy of converting the positions and postures of the fingers u1 and u2 corresponding to the gripping operation into the position and posture of the robot hand increases. When the linked tools 50 of the wearable type illustrated in Fig. 6 and Fig. 7 are to be used, the user may execute a predetermined operation after wearing each linked tool 50, so as to calibrate the attached state of the linked tool 50. Moreover, for example, the restriction mechanism 51 of each of the linked tools 50 illustrated in Fig. 6 and Fig. 7 may be configured to constrain the angle of the corresponding finger relative to the extending direction of the finger.

### <Another Embodiment 3>

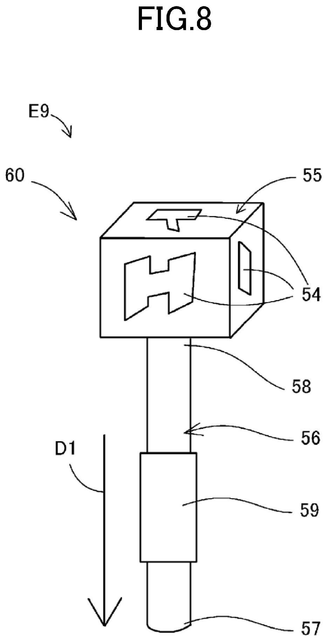

Fig. 8 illustrates a pen-type linked tool 60. In Fig. 8, the linked tool 60 and a user's finger (not illustrated) supporting the linked tool 60 can be regarded as an end effector E9. The linked tool 60 includes a rod-shaped member (extending section) 56 having a first end 57 and a second end 58, the box-shaped member 55 attached to the second end 58, and a cover 59 that covers the outer periphery of the rod-shaped member 56. The user can place a finger on the cover 59 to support the linked tool 60. For example, the user can execute a contact operation (first operation) for bringing the first end 57 into contact with the target object by moving the first end 57 in the direction of the arrow D1. In this configuration, the first controller 111 similarly performs position estimation using the markers 54, so as to be capable of readily obtaining the first information including the position of the linked tool 60 corresponding to the contact operation of the first end 57.

### <Another Embodiment 4>

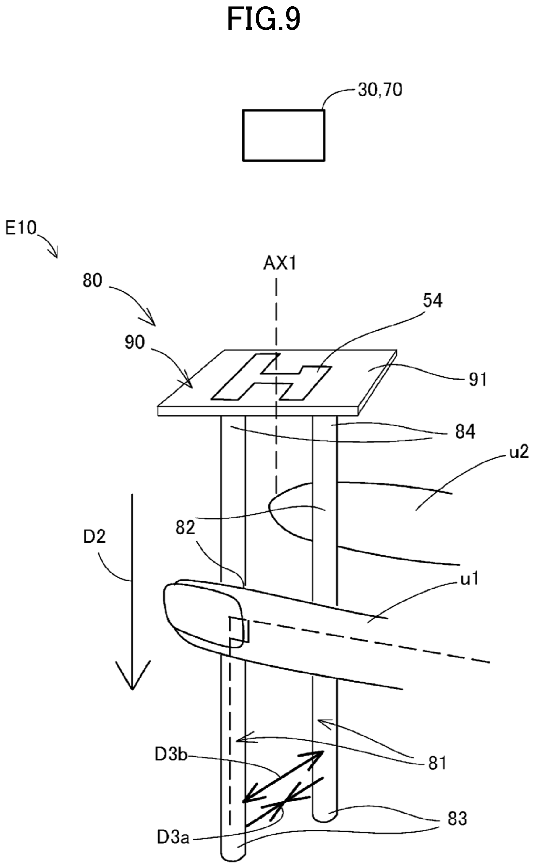

Fig. 9 illustrates a gripping-type linked tool 80. In Fig. 9, the linked tool 80 and the user's fingers u1 and u2 supporting the linked tool 80 can be regarded as an end effector E10. The linked tool 80 includes two rod-shaped members 81 each having a first end 83 and a second end 84, and a marker unit 90 attached to the second ends 84. The rod-shaped members 81 are also extending sections extending in a first direction D2. A section between the first end 83 and the second end 84 of each rod-shaped member 81 functions as a grip section 82 gripped by the user's fingers u1 and u2.

The marker unit 90 includes a base 91 attached to the second ends 84 and a marker 54 provided on the base 91. The base 91 is a substantially plate-shaped member extending in a direction orthogonal to the first direction D2. The marker 54 is provided at substantially the center of the base 91. A central axis AX1 of the marker unit 90 is parallel to the first direction D2. The marker 54 is provided on the base 91 so as to be oriented in a direction extending from the first ends 83 toward the second ends 84. The linked tool 80 is configured such that two rod-shaped members 81 (two first ends 83) are movable in a direction D3a and a direction D3b that are orthogonal to the first direction D2. The direction D3a is a direction in which the two rod-shaped members 81 move toward each other, whereas the direction D3b is a direction in which the two rod-shaped members 81 move away from each other. By placing the fingers u1 and u2 on the grip sections 82 of the two rod-shaped members 81 to move the first ends 83 of the two rod-shaped members 81 in the direction D3a, the user can execute a gripping operation (first operation) on the target object at the first ends 83. In the example illustrated in Fig. 9, the extending direction of the fingers u1 and u2 of the user gripping the linked tool 80 is substantially orthogonal to the first direction D2, which is the extending direction of the rod-shaped members 81.

In this configuration, the first controller 111 similarly performs position estimation using a marker image including the marker 54, so as to be capable of readily obtaining the first information including the position of the linked tool 80 corresponding to the gripping operation of the first ends 83. Furthermore, the marker unit 90 is provided at the second ends 84 of the rod-shaped members (extending sections) 81, and the grip sections 82 are provided between the first ends 83 and the second ends 84. Thus, in the marker image acquired by the imaging device 30, blockage of the marker 54 by the user's fingers can be suppressed. As a result, the visibility of the marker 54 by the imaging device 30 is enhanced. Moreover, the visibility of the marker 54 can be enhanced without adding load to the wrist and the like of the user gripping the linked tool 80.

As illustrated in Fig. 9, the imaging device 30 (detector 70) may be disposed in a work area such that a lens surface of the imaging device 30 is substantially parallel to the marker 54. With this configuration, the accuracy (visibility and image recognition capability) of the marker image acquired by the imaging device 30 is enhanced.

### <Another Embodiment 5>

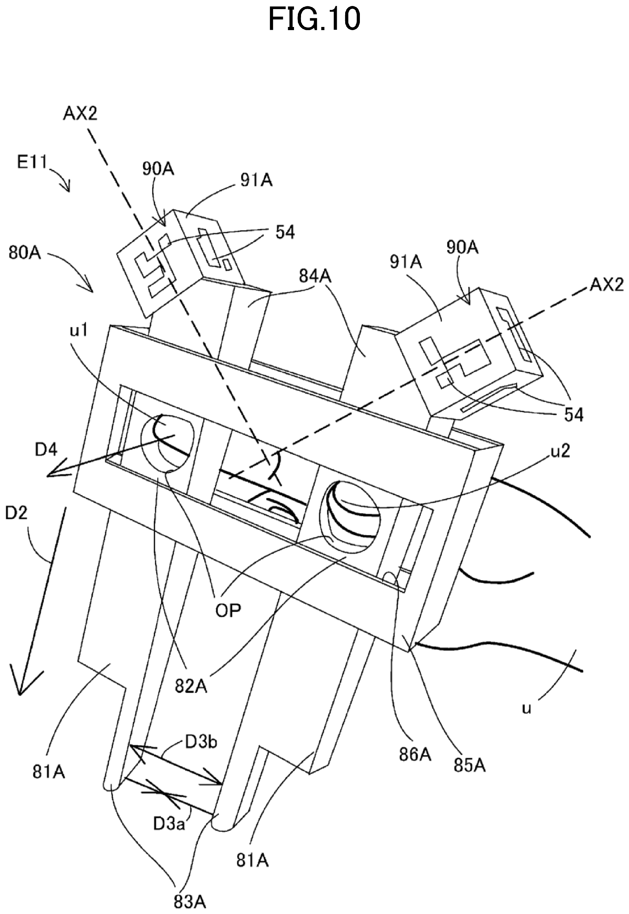

Fig. 10 illustrates a gripping-type linked tool 80A. In Fig. 10, the linked tool 80A and the user's fingers u1 and u2 supporting the linked tool 80A can be regarded as an end effector E11. The linked tool 80A includes two rod-shaped members 81A each having a first end 83A and a second end 84A, a support member 85A that supports the two rod-shaped members 81A, and marker units 90A attached to the second ends 84A of the two rod-shaped members 81A. The rod-shaped members 81A are also extending sections extending in the first direction D2. In this embodiment, the support member 85A supports the two rod-shaped members 81A in a movable manner in the direction D3a and the direction D3b, which are orthogonal to the first direction D2, between the first ends 83A and the second ends 84A. The support member 85A further includes an opening 86A extending therethrough in a direction D4 between the first ends 83A and the second ends 84A. The direction D4 is a direction orthogonal to the first direction D2, the direction D3a, and the direction D3b. Each rod-shaped member 81A has an opening OP extending therethrough in the direction D4 in an area corresponding to the opening 86A. The area provided with the opening OP in each rod-shaped member 81A A functions as a grip section 82A. The user u grips the two rod-shaped members 81A by inserting the fingers u1 and u2 into the respective openings OP in the two rod-shaped members 81A, and moves the first ends 83A of the two rod-shaped members 81A in the direction D3a, thereby executing a gripping operation (first operation) on a target object at the first ends 83A.

In this embodiment, each marker unit 90A includes a base 91A attached to the corresponding second end 84A and markers 54 provided on the base 91A. The base 91A is a polygonal box-shaped member. A central axis AX2 of each marker unit 90A intersects the first direction D2. The markers 54 are provided on at least two surfaces of the base 91A. For example, among the surfaces of each base 91A, the markers 54 are provided on surfaces excluding the surface attached to the corresponding second end 84A. As illustrated in Fig. 10, the markers 54 provided on the respective surfaces have different shapes.

In this configuration, the first information including the position of the linked tool 80A corresponding to the gripping operation of the first ends 83A can be readily obtained. Moreover, in a marker image acquired by the imaging device 30, a decrease in visibility of each marker 54 caused by a user's finger can be suppressed. Furthermore, in this embodiment, each marker unit 90A is provided at the corresponding second end 84A such that the central axis AX2 of the marker unit 90A intersects the extending direction D2 of the corresponding rod-shaped member 81A (extending section). Thus, the accuracy of acquiring the positions of the two rod-shaped members 81A from an analytical result of the marker image is enhanced. In detail, when an image of the linked tool 80A is captured by the imaging device 30, multiple markers 54 may always appear in the imaging result. Thus, a situation where the markers 54 do not appear in the imaging result due to the markers 54 being blocked by peripheral objects can be suppressed. Moreover, by analyzing the marker image in which multiple markers 54 appear, the accuracy of acquiring the position of the linked tool 80A is enhanced. For example, the marker image can be analyzed by searching for markers 54 within the marker image, estimating the positions of the markers 54, and averaging the position estimation results of the markers 54. When a view of a marker 54 from the front is defined as 0°, an amount of change in the appearance of the marker 54 becomes larger when the angle changes from 40° to 50° due to movement of the marker 54 in any direction caused by an operation of the linked tool 80A, as compared with when the angle changes from 0° to 10°, even if the amount of angular change is the same. Therefore, the accuracy of acquiring the posture of the linked tool 80A is enhanced.

### <Another Embodiment 6>

The first operation applied to the annotation system 10 is not limited to an operation where an end effector grips a target object or an end effector comes into contact with a target object, and various operations are applicable. For example, the first image may be an image showing a target object gripped by an end effector, and the first operation may be an operation (releasing operation) involving throwing the target object gripped by the end effector into a predetermined region. In this case, the first controller 111 can determine whether or not the first operation has been executed by detecting, for example, (i) a change in the detection value of a sensor provided at the distal end of the end effector, (ii) an image analytical result of the end effector, or (iii) an operation performed on the operator 29, the input device 40, or another input device by the user or a predetermined input operation, such as the hand signal s. Furthermore, the first information may include, in addition to a position of the end effector when the end effector throws the workpiece, a posture and speed when the end effector throws the workpiece. The first information may include, in addition to a time point (moment) at which the end effector releases the workpiece, time-series positional information (operational sequence) before the workpiece is released. Speed information may be acquired by an inertial measurement unit provided at the end effector. The second information may be information indicating whether or not the target object is contained within the predetermined region, such as a container, as a result of the first operation. The end effector may be a user's finger or a robot hand. According to this configuration, a first image of a state where the target object is gripped by the end effector is acquired, and training is performed with respect to the first image by generating, as a data set D, first information related to the first operation of releasing the target object to the predetermined region, whereby a release position, release posture, release speed, and the like for the end effector to perform the releasing operation can be output in response to input of the first image including the target object. Annotation and training related to such a releasing operation are combined with the annotation and training related to the gripping operation in the above-described embodiments, thereby contributing to, for example, automation of operations, such as gripping waste and releasing the gripped waste to a predetermined region at a waste treatment facility or the like.

### <Another Embodiment 7>

The first controller 111 may acquire, from the imaging device 30, a second image as an image obtained after a gripping operation is executed on the workpiece W. The acquisition of the second image may be performed together with the determination of the first operation (step S30) or the acquisition of the first information (step S40) in the annotation process in Fig. 3. The first controller 111 may generate, as a data set, the second image and the first information corresponding to the first operation. The first information including the position corresponding to the first operation can be used as information including a position for placing the workpiece W in the container C serving as a work area. This is because the placing operation corresponds to reverse playback of the gripping operation. Thus, according to this configuration, a data set containing a work-area image (second image) and first information including a position for executing a second operation can be generated without having to actually perform the second operation equivalent to reverse playback of the first operation. Consequently, the work cost for annotation is effectively reduced. This embodiment is not limited to picking (first operation) and placing (second operation) of the workpiece W, and can be adapted to another first operation and another second operation. For example, if the first operation is a door-pulling operation, the first information including the position corresponding to the first operation can be used as information including a position for executing a door-pushing operation as the second operation.

The various embodiments described above are further modifiable as follows.

For example, in the annotation process using the end effector E1, the end effector E1 may include multiple markers. The first controller 111 may track the position of each marker and use a motion capture technique to acquire the position and posture of the end effector E1 via the imaging device 30. The imaging device 30 may include multiple cameras that have undergone calibration.

Although the marker unit 90 or 90A in the corresponding embodiment described above has the base 91, 91A, or 55 and the markers 54 provided on the base 91, 91A, or 55, each of the markers included in the marker unit may be any marker analyzable in a marker image. For example, the entire marker unit may have a spherical shape or a shape with a protrusion and recess, and the first controller 111 may acquire the first information by acquiring and analyzing a marker image including the shape via the imaging device 30.

The first information does not have to include a posture so long as it includes at least a position. In addition to the position when the first operation is executed, the first information may include information about at least one of the position of the end effector before the first operation is executed and the position of the end effector after the first operation is executed. In other words, the first information may include continuous information (time-series data) related to the first operation.

If there is no target object in a work area, the first controller 111 may generate a data set containing an image of the work area and information indicating that the end effector is not to execute an operation. The second controller 211 may perform training by including the aforementioned data set. According to this configuration, it is possible to generate a data set that can suppress a situation where the end effector operates when there is no target object.

Although the first image including the target object is acquired by the imaging device 30 in the above embodiments, the first image may be acquired by another visual sensor. If the end effector is a robot hand, the imaging device that acquires the first image may be provided in the robot hand or a robot arm to which the robot hand is attached.

The operational information of the end effector may be a detection value of another sensor, such as a gyro-sensor, an acceleration sensor, or an inertial measurement unit including these sensors. The first controller 111 may store the detection value of the sensor provided at the end effector into the memory 120 and determine whether or not the first operation has been executed (step S30 in Fig. 3). The first controller 111 may refer to the memory 120 to perform the determination in step S30 illustrated in Fig. 3 or the process from step S40 to step S50 upon completion of a series of operations by the end effector.

In step S30 (Fig. 3) in the above embodiments, the first controller 111 determines that the first operation has been executed when the detection result of the first sensor 21 satisfies the predetermined determination condition. The determination condition is a condition where the detection value of the first sensor 21 is larger than or equal to the first threshold value stored in the memory 120. In contrast, for example, the determination condition may be a condition where the positional relationship between two fingers of a hand satisfies a predetermined relationship. This predetermined relationship may be set in advance in accordance with the positions of the two fingers when the target object is gripped by the two fingers. In this case, the first controller 111 may acquire the positional relationship between the two fingers from an analytical result of an image acquired by the imaging device 30. Alternatively, the determination condition may be a condition where "two or more fingers of a hand close after opening". The first controller 111 may determine that the fingers of the hand have closed based on a detection value of the first sensor 21. The determination condition may be set by training from a transition, such as a positional change in the fingers or a change in the value of the first sensor 21. The first controller 111 may use the determination condition set by training to determine whether or not the first operation has been executed. The determination condition is appropriately changeable in accordance with the type of end effector, sensor, or first operation.

The order of the steps in the annotation process described above may be interchanged, where appropriate, some of the steps may be executed concurrently, or any of the steps may be omitted. For example, step S40 for acquiring the first information in Fig. 3 and step S45 for determining whether or not the operation is successful may be interchanged, or may be executed concurrently. Furthermore, in the annotation process, step S45 for determining whether or not the operation is successful may be omitted.

In the above embodiments, the user operates the operator 29 to control the end effector E1 via the robot controller 25. In contrast, the robot controller 26 of the robot controller 25 may use an initial trained model to output a position and posture for executing the first operation with respect to the acquired first image. The first controller 111 may further generate, as the data set D, the first image, the first information including the output position and posture, and the second information indicating whether or not the first operation is successful. The second controller 211 may perform training by using the data set D containing the second information indicating whether or not the first operation is successful, and update the initial trained model. According to this configuration, the accuracy of training can be further enhanced, so that the success rate of the first operation by the robot controller 25 can be enhanced.

In the above embodiments, the annotation device 100 includes the function of the first controller 111, and the training device 200 includes the function of the second controller 211. In contrast, the first controller 111 and the second controller 211 may be included in a single controller. At least a part of the function of the first controller 111 may be executed by the second controller 211, and at least a part of the function of the second controller 211 may be executed by the first controller 111.

The functions of the elements disclosed in this description may be implemented using circuitry or processing circuitry including a general-purpose processor, a dedicated processor, an integrated circuit, an ASIC (Application Specific Integrated Circuit), a conventional circuit, and/or a combination thereof, configured or programmed to perform the disclosed functions. A processor includes a transistor and other circuits and therefore is considered to be processing circuitry or circuitry. In the present disclosure, a circuit, unit, or means is hardware that executes the recited functions, or hardware programmed to execute the recited functions. The hardware may be the hardware disclosed in this description, or another known hardware programmed or configured to execute the recited functions. If the hardware is a processor considered to be a type of circuitry, the circuit, means, or unit is a combination of hardware and software, and the software is used to configure the hardware and/or the processor.

The present disclosure is not limited to the embodiments described above and may be implemented in various forms without departing from the spirit thereof. For example, the present disclosure may also be implemented according to the following aspects. The technical features in the above-described embodiments that correspond to the technical features in the aspects described below may be replaced or combined as appropriate in order to partially or entirely solve the problems addressed by the present disclosure or to partially or entirely achieve the advantages of the present disclosure. Furthermore, if a technical feature is not described as essential in this description, it may be omitted as appropriate.
<1> A first aspect of the present disclosure provides an annotation device. The annotation device includes: a first controller configured to generate a training data set; and a storage unit configured to store the data set. The first controller is configured to acquire a first image captured by an imaging device and including a target object. The first controller is configured to acquire operational information related to an operation performed on the target object by an end effector and determine whether or not the end effector has executed a predetermined first operation on the target object. The first controller is configured to generate, as the data set, the first image and first information of the end effector if the end effector has executed the first operation. The first information includes a position corresponding to the first operation of the end effector. The controller is configured to cause the storage unit to store the generated data set.

According to this aspect, the first controller generates, as the training data set, the first image including the target object and a position and posture when the end effector actually executes the first operation on the target object. In other words, the first controller annotates the actual position and posture at which the end effector has executed the first operation onto the first image. Thus, the training data set containing the first image and the first information can be collected regardless of the material or shape of the target object. Furthermore, since the first controller annotates the first information onto the first image, the work cost for the annotation can be reduced, as compared with a configuration where the user performs the annotation.

In this aspect, various operations corresponding to the end effector can be applied as the first operation, such as a gripping operation for gripping the target object, a suctioning operation for suctioning the target object, a contact operation for coming into contact with the target object, and a pre-grasp operation therefor.

<2> In the above aspect, the operational information may include a detection value of a sensor provided at the end effector, the detection value changing in accordance with the operation performed on the target object by the end effector. The first controller may be configured to acquire the detection value of the sensor. The first controller may be configured to determine that the end effector has executed the first operation on the target object if the detection value satisfies a predetermined determination condition.

According to this aspect, the first controller determines whether or not the end effector has executed the first operation by using the detection value of the sensor, so that the first controller can determine whether or not the first operation has been executed without interrupting the operation performed by the end effector. Consequently, the time required for the annotation can be reduced.

<3> In the above aspect, the operational information may include a predetermined input operation executed on an input device. The first controller may be configured to acquire the predetermined input operation via the input device. When the first controller acquires the predetermined input operation, the first controller may determine that the end effector has executed the first operation on the target object.

According to this aspect, the first controller can acquire the predetermined input operation and determine whether or not the first operation has been executed.

The predetermined input operation may be a user's gesture, such as a hand signal, or may be an operation performed by the user on another input device provided separately from the annotation device.

<4> In the above aspect, the end effector may be a gripping-type tool that grips the target object. The first operation may be an operation in which the gripping-type tool grips the target object. The first information may include a position of the gripping-type tool when the gripping-type tool grips the target object.

According to this aspect, a data set containing the first image including the target object and a gripping position and gripping posture of the end effector for gripping the target object can be collected regardless of the target object.

In this aspect, the first information may further include an opening width of multiple distal ends of the gripping-type tool.

<5> In the above aspect, the gripping-type tool may be a robot hand attached to a robot arm and configured to grip the target object. The first operation may be an operation in which the robot hand grips the target object. The first information may include a position when the robot hand grips the target object. The first controller may be configured to acquire the first information of the robot hand via at least one of a controller and the imaging device, the controller being configured to control the robot hand.

According to this aspect, the first controller acquires the first information via the controller or the imaging device, whereby the work cost for generating the data set can be reduced.

<6> In the above aspect, the end effector may include a linked tool supported by a finger of a user and configured to operate in conjunction with movement of the finger. The first information may include a position of the linked tool when the end effector including the linked tool executes the first operation on the target object.

According to this aspect, a data set containing the first image and the position of the linked tool can be generated.

The linked tool may operate in conjunction with the user's finger executing the first operation directly on the target object.

<7> In the above aspect, the first controller may be configured to acquire the first information via the imaging device.

According to this aspect, the first controller acquires the position of the linked tool via the imaging device, whereby the work cost for generating the data set can be reduced.

The linked tool may include a marker. The first controller may acquire and analyze an image including the marker via the imaging device, so as to acquire, as the first information, the position of the end effector corresponding to the first operation.

<8> In the above aspect, the linked tool may have a restriction mechanism. The restriction mechanism may include an attachment section for attaching the linked tool to the finger of the user. The restriction mechanism may be configured to restrict a degree of freedom of movement of the finger of the user.

According to this aspect, the restriction mechanism can make a finger-based operation resemble an operation of a robot hand. Thus, a position of the linked tool corresponding to the first operation can be accurately converted into a position of the robot hand.

<9> In the above aspect, the restriction mechanism may include an angle-constraining member configured to constrain an angle of the finger of the user.

According to this aspect, the restriction mechanism can make a finger-based operation resemble an operation of a robot hand. Thus, a position of the linked tool corresponding to the first operation can be accurately converted into a position of the robot hand.

The linked tool according to any of the above aspects <6> to <9> is not limited to a user's finger, and may be supported by the user's body and operate in conjunction with movement of at least a part of the body. For example, the linked tool may be attached to a user's leg and may operate in conjunction with movement of the leg.

<10> In the above aspect, the first controller may be configured to determine whether or not the first operation by the end effector is successful by using the operational information. The first controller may be configured to generate, as the data set, second information, the first image, and the first information, the second information indicating whether or not the first operation is successful.

According to this aspect, a data set capable of further enhancing the accuracy of training can be generated.

<11> In the above aspect, the first image may include the target object and a work area in which the target object is disposed. The first controller may be further configured to acquire a second image corresponding to the first image from the imaging device, the second image being an image of the work area after the first operation is executed on the target object. The first controller may generate, as the data set, the second image and the first information corresponding to the first operation.

According to this aspect, since the data set containing the second image and the first information is generated, a data set for a second operation equivalent to reverse playback of the first operation can be generated without executing the second operation.

In this aspect, the first operation may be a gripping operation, and the first information may include the position of the end effector when gripping the target object. A second controller may perform training using the data set containing the second image and the first information, thereby generating a trained model that outputs a position for releasing the gripped target object in response to input of the second image.

In this aspect, the second image may be an image of the work area after the target object is removed from the work area as a result of the first operation executed on the target object.

<12> A second aspect of the present disclosure provides a training system including: the annotation device according to the above aspect; and a training device having a second controller configured to perform supervised learning. The second controller may be configured to generate a trained model based on the data set in response to input of an image including the target object, the trained model outputting the first information corresponding to the first operation of the end effector.

According to this aspect, the first information used for training is not an estimated value, but includes a position when the end effector has actually executed the first operation on the target object. Therefore, regardless of the material or shape of the target object, a trained model capable of outputting the first information including the position of the end effector for executing the first operation can be generated in response to input of the first image including the target object. Moreover, the success rate of the first operation can be enhanced when the first operation is executed using the position output from the trained model.

In this aspect, the second controller may use the data set including the second information to generate the trained model that outputs the first information corresponding to the first operation of the end effector in response to input of the image including the target object.

According to this aspect, the success rate of the first operation can be further enhanced when the first operation is executed using the position output from the generated trained model.

<13> A third aspect of the present disclosure provides an annotation system. The annotation system includes: an imaging device; a detector; and an annotation device. The imaging device is configured to capture a first image including a target object. The detector is configured to detect operational information of an end effector configured to execute a predetermined operation on the target object. The annotation device includes a first controller and a storage unit, the first controller being configured to generate a training data set. The first controller is configured to acquire the operational information and determine whether or not the end effector has executed a predetermined first operation on the target object. The first controller is configured to generate, as the data set, the first image and first information if the end effector has executed the first operation. The first information includes a position corresponding to the first operation. The first controller is configured to cause the storage unit to store the generated data set.

<14> In the above aspect, the detector may include a sensor provided at the end effector. The operational information may include a detection value of the sensor, the detection value changing in accordance with the operation performed on the target object by the end effector. The first controller may be configured to determine that the end effector has executed the first operation on the target object if the detection value exceeds a predetermined threshold value.

<15> In the above aspect, the detector may include an input device configured to detect a predetermined input operation. The operational information may include the predetermined input operation executed on the input device. When the first controller receives the predetermined input operation via the detector, the first controller may determine that the end effector has executed the first operation.

<16> A fourth aspect of the present disclosure provides an annotation method. The annotation method includes: acquiring a first image captured by an imaging device and including a target object; acquiring operational information related to an operation performed on the target object by an end effector and determining whether or not the end effector has executed a predetermined first operation on the target object; and generating, as a data set for supervised learning, the first image and first information of the end effector if the end effector has executed the first operation, the first information including a position corresponding to the first operation.

<17> A fifth aspect of the present disclosure provides an annotation program. The annotation program causes a computer to execute a process including: acquiring a first image captured by an imaging device and including a target object; acquiring operational information related to an operation performed on the target object by an end effector and determining whether or not the end effector has executed a predetermined first operation on the target object; and generating, as a data set for supervised learning, the first image and first information of the end effector if the end effector has executed the first operation, the first information including a position corresponding to the first operation.

<18> In the above aspect, the first image may be an image including the target object and captured by the imaging device in a physical space as an actual space. The operational information may be information related to the operation performed on the target object by the end effector in the physical space. The first information may be information of the end effector including a position in the physical space corresponding to the first operation. The data set may be a set of the first image and the first information in the physical space.

According to this aspect, the first controller annotates an actual position and posture at which the end effector has executed the first operation in the physical space onto the first image acquired in the physical space. Thus, a highly-accurate training data set can be collected.

<19> In the above aspect, the end effector may be a linked tool supported by a finger of a user and configured to operate in conjunction with movement of the finger. The linked tool may have an extending section extending in a first direction and a marker unit. The extending section may include a first end configured to be brought closer toward the target object, a second end opposite the first end in the first direction, and a grip section provided between the first end and the second end in the first direction and configured to be gripped by the user. The marker unit may be provided at the second end. The first controller may be configured to: acquire a marker image captured by the imaging device in the physical space and including the marker unit, and acquire the first information in the physical space by using the marker image.

According to this aspect, blockage of the marker by the user's finger can be suppressed in the marker image. Consequently, the visibility of the marker is enhanced.

In this aspect, the first end is an end that actually executes the predetermined first operation on the target object. The first end may be brought closer toward the target object by bringing the first end directly into contact with the target object or by causing the first end to attract the target object with, for example, a magnetic force or suction force to come into contact with the target object.

<20> In the above aspect, the marker unit may have a three-dimensionally-formed marker.

The three-dimensionally-formed marker may be a three-dimensional object as the entire marker or may be a marker including a first marker rendered on a first surface and a second marker rendered on a second surface that intersects the first surface. For example, the marker unit may include a polygonal base, and the markers may be provided on two or more surfaces of the base. The first marker and the second marker may be markers configured such that a detection result obtained by the detector differs therebetween. For example, the first marker and the second marker may differ in shape.

According to this aspect, the marker visibility can be further enhanced.

<21> In the above aspect, the marker unit may be provided at the second end such that an extending direction of a central axis of the marker unit intersects the first direction.

According to this aspect, the accuracy of the position of the end effector, which is acquired from an analytical result of an image including the marker unit, is enhanced.

<22> In the above aspect, the target object may have a first portion. The first image may be an image captured by the imaging device in the physical space and including the target object having the first portion. The first portion may include at least one of a portion configured to at least partially transmit light and a portion configured to totally reflect light.

The portion configured to at least partially transmit light may be transparent or semi-transparent.

Normally, the first portion including at least one of a transparent portion, a semi-transparent portion, and a total reflection portion is unlikely to appear in the image. Thus, it may be difficult to add positional information to the image, or the positional information may become inaccurate, thus possibly leading to an increase in work cost for annotation and a decrease in accuracy. According to this aspect, the first controller generates, as the training data set, the first image including the target object in the physical space and the first information including the position of the end effector when the first operation is actually executed on the target object in the physical space. Consequently, a training data set can be generated regardless of the material or shape of the target object.

The present disclosure may also be implemented in various aspects other than those described above. For example, the present disclosure may be implemented in the form of a non-transitory storage medium storing a computer program for realizing at least one of the functions of the annotation device 100, the first controller 111, and the second controller 211.

### DESCRIPTION OF REFERENCE CHARACTERS

10: annotation system
20: robot arm
21: first sensor
22: second sensor
25: robot controller
26: robot controller
29: operator
30: imaging device
40: input device
50, 60: linked tool
51: restriction mechanism
52: attachment section
53: plate-shaped member
54: marker
55: box-shaped member
56: rod-shaped member
57: first end
58: second end
59: cover
70: detector
80, 80A: linked tool
81, 81A: rod-shaped member, extending section
OP: opening
82, 82A: grip section
83, 83A: first end
84, 84A: second end
85A: support member
86A: opening
90, 90A: marker unit
91, 91A: base
100: annotation device
110: CPU
111: first controller
120: memory
130: interface circuit
200: training device
210: CPU
220: memory
211: second controller
230: interface circuit
300: training system
C: container
D: data set
E1, E2, E2a, E7, E8, E9: end effector
E21: base
E22: distal end
J: joint
L: link
P1: annotation program
P2: training program
T: distal end
W, W1, W2, W3: workpiece
s: hand signal
tr: transparent portion
u: user
u1, u2: finger

## Claims

1. An annotation device comprising:
a first controller configured to generate a training data set; and
a storage unit configured to store the data set,
wherein the first controller is configured to:
acquire a first image captured by an imaging device and including a target object,
acquire operational information related to an operation performed on the target object by an end effector and determine whether or not the end effector has executed a predetermined first operation on the target object,
generate, as the data set, the first image and first information of the end effector if the end effector has executed the first operation, the first information including a position corresponding to the first operation, and
cause the storage unit to store the generated data set.

2. The annotation device according to claim 1,
wherein the operational information includes a detection value of a sensor provided at the end effector, the detection value changing in accordance with the operation performed on the target object by the end effector,
wherein the first controller is configured to:
acquire the detection value of the sensor, and
determine that the end effector has executed the first operation on the target object if the detection value satisfies a predetermined determination condition.

3. The annotation device according to claim 1,
wherein the operational information includes a predetermined input operation executed on an input device,
wherein, when the first controller acquires the predetermined input operation via the input device, the first controller is configured to determine that the end effector has executed the first operation on the target object.

4. The annotation device according to claim 1,
the end effector is a gripping-type tool configured to grip the target object,
wherein the first operation is an operation in which the gripping-type tool grips the target object, and
wherein the first information includes a position of the gripping-type tool when the gripping-type tool grips the target object.

5. The annotation device according to claim 4,
wherein the gripping-type tool is a robot hand attached to a robot arm and configured to grip the target object, and
wherein the first operation is an operation in which the robot hand grips the target object,
wherein the first information includes a position when the robot hand grips the target object, and
wherein the first controller is configured to acquire the first information of the robot hand via at least one of a robot controller and the imaging device, the robot controller being configured to control the robot hand.

6. The annotation device according to claim 1,
wherein the end effector includes a linked tool supported by a finger of a user and configured to operate in conjunction with movement of the finger, and
wherein the first information includes a position of the linked tool when the end effector executes the first operation on the target object.

7. The annotation device according to claim 6,
wherein the first controller is configured to acquire the first information via the imaging device.

8. The annotation device according to claim 6,
wherein the linked tool includes a restriction mechanism including an attachment section that attaches the linked tool to the finger, the restriction mechanism being configured to restrict a degree of freedom of movement of the finger.

9. The annotation device according to claim 8,
wherein the restriction mechanism includes an angle-constraining member configured to constrain an angle of the finger.

10. The annotation device according to claim 1,
wherein the first controller is configured to:
determine whether or not the first operation by the end effector is successful by using the operational information, and
generate, as the data set, second information, the first image, and the first information, the second information indicating whether or not the first operation is successful.

11. The annotation device according to claim 1,
wherein the first image includes the target object and a work area in which the target object is disposed, and
wherein the first controller is further configured to:
acquire a second image corresponding to the first image from the imaging device, the second image being an image of the work area after the first operation is executed on the target object, and
generate, as the data set, the second image and the first information corresponding to the first operation.

12. A training system comprising:
the annotation device according to claim 1; and
a training device including a second controller configured to perform supervised learning,
wherein the second controller is configured to use the data set to generate a trained model in response to input of an image including the target object, the trained model outputting the first information corresponding to the first operation of the end effector.

13. An annotation system comprising:
an imaging device configured to capture a first image including a target object;
a detector configured to detect operational information of an end effector configured to execute a predetermined operation on the target object; and
an annotation device including a first controller and a storage unit, the first controller being configured to generate a training data set,
wherein the first controller is configured to:
acquire the operational information and determine whether or not the end effector has executed a predetermined first operation on the target object,
generate, as the data set, the first image and first information of the end effector if the end effector has executed the first operation, the first information including a position corresponding to the first operation, and
cause the storage unit to store the generated data set.

14. The annotation system according to claim 13,
wherein the detector includes a sensor provided at the end effector,
wherein the operational information includes a detection value of the sensor, the detection value changing in accordance with the operation performed on the target object by the end effector, and
wherein the first controller is configured to:
determine that the end effector has executed the first operation on the target object if the detection value satisfies a predetermined determination condition.

15. An annotation method comprising:
acquiring a first image captured by an imaging device and including a target object;
acquiring operational information related to an operation performed on the target object by an end effector and determining whether or not the end effector has executed a predetermined first operation on the target object; and
generating, as a data set for supervised learning, the first image and first information of the end effector if the end effector has executed the first operation, the first information including a position corresponding to the first operation.

16. The annotation device according to claim 1,
wherein the first image is an image including the target object and captured by the imaging device in a physical space as an actual space,
wherein the operational information is information related to the operation performed on the target object by the end effector in the physical space,
wherein the first information is information of the end effector including a position in the physical space corresponding to the first operation, and
wherein the data set is a set of the first image and the first information in the physical space.

17. The annotation device according to claim 16,
wherein the end effector includes a linked tool supported by a finger of a user and configured to operate in conjunction with movement of the finger, the linked tool including an extending section extending in a first direction and a marker unit,
wherein the extending section includes a first end configured to be brought closer toward the target object, a second end opposite the first end in the first direction, and a grip section provided between the first end and the second end in the first direction and configured to be gripped by the user, and
wherein the marker unit is provided at the second end, and
wherein the first controller is configured to:
acquire a marker image captured by the imaging device in the physical space and including the marker unit, and
acquire the first information in the physical space by using the marker image.

18. The annotation device according to claim 17,
wherein the marker unit includes a three-dimensionally-formed marker.

19. The annotation device according to claim 17,
wherein the marker unit is provided at the second end such that an extending direction of a central axis of the marker unit intersects the first direction.

20. The annotation device according to claim 1,
wherein the target object includes a first portion including at least one of a portion configured to at least partially transmit light and a portion configured to totally reflect light, and
wherein the first image is an image captured by the imaging device in the physical space and including the target object including the first portion.
